(19)

Europäisches Patentamt

European Patent Office

Office européen des brevets

(11)  **EP 3 805 038 A1**

(12)  **EUROPEAN PATENT APPLICATION**
published in accordance with Art. 153(4) EPC

(43) Date of publication:
**14.04.2021  Bulletin 2021/15**

(21) Application number: **18920844.0**

(22) Date of filing: **01.06.2018**

(51) Int Cl.:
**B60L 7/18** *(2006.01)*

(86) International application number:
**PCT/JP2018/021283**

(87) International publication number:
**WO 2019/229999 (05.12.2019 Gazette 2019/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NISSAN MOTOR CO., LTD.**
**Yokohama-shi, Kanagawa 221-0023 (JP)**

(72) Inventors:
- **KIKUCHI, Takahiro**
  **Atsugi-shi, Kanagawa 243-0123 (JP)**
- **NAGAYAMA, Kazutoshi**
  **Atsugi-shi, Kanagawa 243-0123 (JP)**

(74) Representative: **Hoefer & Partner Patentanwälte mbB**
**Pilgersheimer Straße 20**
**81543 München (DE)**

(54)  **INVERTER CONTROL METHOD AND INVERTER CONTROL SYSTEM**

(57)    An inverter control method for controlling a switching of an inverter in a vehicle, the vehicle having: a motor for transmitting torque to drive wheels; the inverter for converting DC power into AC power mutually and supplying the AC power to the motor; and a DC power source for supplying the DC power to the inverter, the control method including: determining whether or not a power supply to the inverter is stopped; executing a short-circuit switching control to turn on switching elements provided in the inverter when the power supply to the inverter is stopped; obtaining a motor state parameter as a variable representing a state of the motor, the motor state parameter being used as a determination standard for determining whether or not an oscillation occurs in the vehicle; and stopping the short-circuit switching control before the oscillation occurs in the vehicle based on the motor state parameter obtained, when the power supply to the inverter is stopped.

EP 3 805 038 A1

```
                    START

S101    Receiving the          No
        Relay-OFF Signal?
            │ Yes
S102    Starting the Short-Circuit
        Switching Control

S104    Absolute Value of Motor Rotational   No
        Speed < Threshold Value; or
        Absolute Value Of Estimated Torque >
        Threshold Value
            │ Yes
S105    Stopping the Short-Circuit    S106  Continuing the Short-    S103  Continuing the Normal
        Switching Control                   Circuit Switching Control        Switching Control

                    END
```

FIG.2

**Description**

TECHNICAL FIELD

The present invention relates to a control method for an inverter and a control system for an inverter.

BACKGROUND ART

JP2006-74841A discloses a motor control device configured to control an inverter to short-circuit a coil of the motor (non-normal switching control), when a voltage of a capacitor (smoothing capacitor) connected to an input side of the inverter, which is a DC voltage from the inverter for the capacitor, becomes larger than a predetermined value while a power supply to the motor is suspended during the motor is rotating.

SUMMARY OF INVENTION

However, in the above motor control device, when controlling the inverter so as to short-circuit the coil when the rotational speed of the motor is decreasing, the braking torque generated by the motor becomes larger. Consequently, there is a possibility that an oscillation in the vehicle body arises.
The present invention has been made in view of such circumstances, and an object thereof is to provide an inverter control method and an inverter control system capable of avoiding the oscillation in the vehicle body caused by an increase of the braking torque generated by the motor.

MEANS FOR SOLVING THE PROBLEM

According to one of the embodiments of the present invention, an inverter control method for controlling a switching of an inverter in a vehicle, the vehicle having: a motor for transmitting torque to drive wheels; the inverter for converting DC power into AC power mutually and supplying the AC power to the motor; and a DC power source for supplying the DC power to the inverter, the control method including: determining whether or not a power supply to the inverter is stopped; executing a short-circuit switching control to turn on switching elements provided in the inverter when the power supply to the inverter is stopped; obtaining a motor state parameter as a variable representing a state of the motor, the motor state parameter being used as a determination standard for determining whether or not an oscillation occurs in the vehicle; and stopping the short-circuit switching control before the oscillation occurs in the vehicle based on the motor state parameter obtained, when the power supply to the inverter is stopped.

BRIEF DESCRIPTION OF DRAWINGS

[FIG. 1] FIG. 1 is a schematic configuration diagram of a motor control device constituting an inverter control system according to one of the embodiments of the present invention.
[FIG. 2] FIG. 2 is a flowchart showing a flow of a determination for a stop of a short-circuit switching control.
[FIG. 3] FIG. 3 is a block diagram consisting of a motor in a three-phase short-circuited state and a vehicle model.
[FIG. 4] FIG. 4 is a diagram showing a characteristic of the motor in the three-phase short-circuited state.
[FIG. 5] FIG. 5 is an illustration for a model of a transmission system of a driving force by the vehicle.
[FIG. 6] FIG. 6 is a diagram showing a simulation result (time response) using the block diagram shown in FIG. 3.
[FIG. 7] FIG. 7 is a schematic configuration diagram of the motor control device for another example, the motor control device constituting the control system for the inverter according to one of the embodiments of the present invention.

DESCRIPTION OF EMBODIMENTS

(First Embodiment)

Hereinafter, one of the embodiments of the present invention will be described with reference to drawings. In a following description, for simplifying the description, components in three-phase or in d-q axes for a current or a voltage are represented collectively by "dq axes current values (id, iq)" or "three-phase current values (iu, iv, iw)" and others, if necessary.

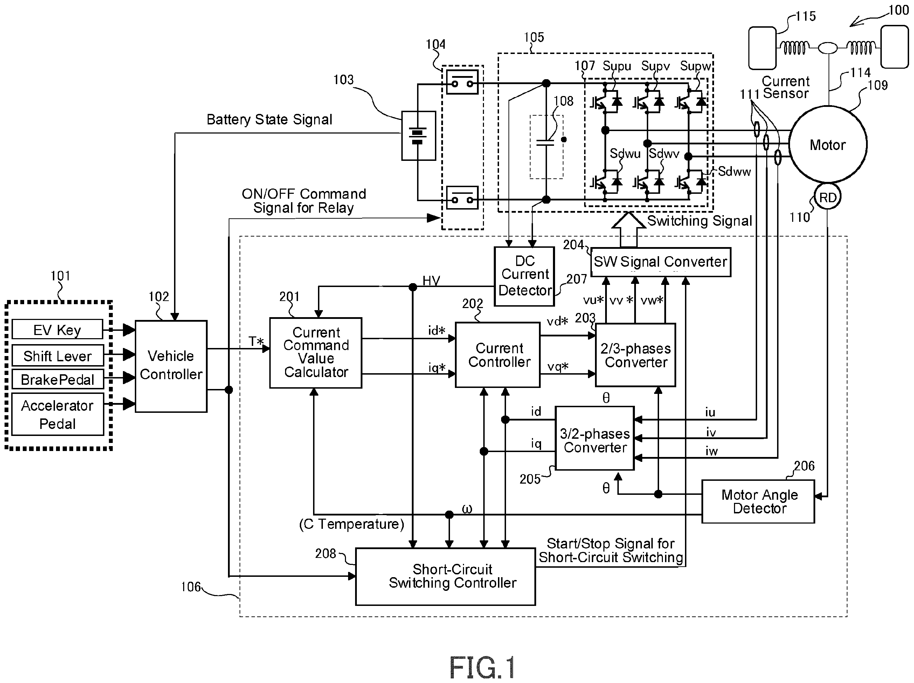

FIG. 1 is a diagram showing a configuration of a motor control device 100 according to the present embodiment.

The motor control device 100 constituting an inverter control system in the present embodiment is a device for controlling an inverter 105. By controlling the inverter 105, the motor control device 100 operates a motor 109 as an electric motor (a permanent magnet synchronous electric motor) connected to drive wheels, when the motor 109 is mounted on an electric vehicle and others.

As shown in the figure, the motor control device 100 mainly includes a driver's operation information controller 101, a vehicle controller 102, a battery 103, a relay 104, the inverter 105, and a motor controller 106.

When the driver performs operations by such an Electrical Vehicle key, a shift lever, a brake pedal, and an accelerator pedal, the driver's operation information controller 101 transmits an operation detected signal to the vehicle controller 102 based on the operations.

The vehicle controller 102 transmits an on/off command signal for instructing a switching on/off to the relay 104, based on the received operation detected signal. Further, the vehicle controller 102 outputs a torque command value T* corresponding to the operation detected signal to the current command value calculator 201 in the motor controller 106.

In addition, the vehicle controller 102 of the present embodiment performs a battery diagnosis based on parameters indicating a state such as SOC (state of charge) of the battery 103. The battery diagnosis is executed for a determination whether the battery 103 is normal, and the determination includes a decision whether the SOC of the battery 103 is in a low charge stat, in which the SOC is below a predetermined threshold value.

Then, when the vehicle controller 102 determines that the battery 103 is not normal, the vehicle controller 102 sets the torque command value T* to zero and transmits the torque command value T* to the current command value calculator 201 so as to suppress a consumption of the charging capacity of the battery 103. Furthermore, in this case, the vehicle controller 102 transmits the off command signal to the relay 104.

The battery 103 functions as a power supply for supplying power to the motor 109 through an inverter 105 during a power running is performed. In other words, the battery 103 functions as a DC power source for supplying DC power to the inverter 105. The battery 103 also stores electric power supplied from the motor 109 via the inverter 105 while a regenerative operation is performed.

A relay 104 is switched to be opened and closed in response to the on/off command signal from the vehicle controller 102, such that an on-state, in which the battery 103 and the inverter 105 are conducted, and an off-state, in which the battery 103 and the inverter 105 are electrically disconnected, are changed mutually. In particular, the relay 104 is opened, in response to the off command signal from the vehicle controller 102, such that the battery 103 and the inverter 105 are electrically disconnected.

The inverter 105 converts the DC power from the battery 103 to the three-phase AC power in response to the switching signal generated from the torque command value T*. Later, the inverter 105 supplies the three-phase AC power to the motor 109.

More specifically, the inverter 105 includes a switching element 107 for performing a conversion between the DC power and the three-phase AC power, and a smoothing capacitor 108 for smoothing a voltage inside the inverter 105.

The switching element 107 includes switching elements Supu, Supv and Supw for an upper arm Sup in the three-phase (UVW-phase), and switching elements Sdwu, Sdwv and Sdww for a lower arm Sdw in the three-phase (UVW-phase). The switching elements are constituted by, for example, IGBT (Insulated Gate Bipolar Transistor) or may be constituted by bipolar transistors, MOSFETs, or GTOs (Gate Turn-Off thyristor). Further, the switching elements Supu, Supv, Supw, Sdwu, Sdwv and Sdww are connected to diodes in anti-forwarded directions. Then, when the switching elements Supu, Supv, Supw, Sdwu, Sdwv and Sdww receive the PWM (Pulse Wide Modulation) signals as signals for switching from a switching signal converter 204 described later, the switching elements Supu, Supv, Supw, Sdwu, Sdwv and Sdww are opened and closed with a duty ratio defined by the PWM signal. That is, the switching element 107 is opened and closed according to the switching control (a normal switching control) based on the PWM signal.

Thus, the motor 109 will generate a motor driving force corresponding to the torque command value T*(>0). While the torque command value T* is negative, the inverter 105 converts the regenerated power by the motor 109 to the DC power, and the DC power is charged in the battery 103.

Further, in the switching element 107 of the present embodiment, when the switching signal converter 204 receives a start signal for a short-circuit switching from a short-circuit switching controller 208 as described later, all the switching elements Supu, Supv, Supw, Sdwu, Sdwv and Sdww are in the on-states (closed states), such that the short-circuit switching control is performed to allow the inverter 105 to be in the three-phase short-circuited state. Furthermore, when the switching signal converter 204 receives a stop signal for the short-circuit switching from the short-circuit switching controller 208, the switching element 107 stops the short-circuit switching control, such that the three-phase short-circuited state is released in the inverter 105. Details of the start and stop of the three-phase short-circuited state will be described later.

Next, the motor controller 106 includes the current command value calculator 201, a current controller 202, a two-phase/three-phase converter 203, the switching signal converter 204, a three-phase/two-phase converter 205, a motor angle detector 206, a DC current detector 207 and the short-circuit switching controller 208. The configuration of the motor controller 106 of the present embodiment is made by one or more controller(s) including various calculator and/or controller such as CPUs, various storage devices such as ROM and RAM, and interfaces for input/output.

The current command value calculator 201 calculates a d-axis current command value id* and a q-axis current command value iq* based on the torque command value T*, the electrical angular velocity of the motor 109 (hereinafter, also referred to as "a motor electrical angular velocity $\omega$") and the inverter voltage HV as a DC voltage from the inverter 105.

More particularly, the current command value calculator 201 calculates the dq-axes current command values (id*, iq*) based on a predetermined table which defines a relation between the torque command value T*, the motor electrical angular velocity $\omega$ and the inverter voltage HV. The current command value calculator 201 outputs the calculated dq-axes current command value (id*, iq*) to the current controller 202.

The current controller 202 calculates the dq-axes voltage command value (vd*, vq*), such that the dq-axes current value (id, iq), which actually flow to the motor 109, approaches the dq-axes current command value (id*, iq*), which are input from the current command value calculator 201. Later, the dq-axes current values, which actually flow to the motor 109, are also referred to as "motor current values (id, iq)" or "a motor current value i".

For example, the current controller 202 calculates the dq-axes voltage command values (vd*, vq*) based on a PI control according to the following equation (1).
[Equation 1]

$$V_d{}^* = K_{pd}(i_d{}^* - i_d) + K_{id}\int(i_d{}^* - i_d)dt - \omega L_q \cdot i_q$$
$$V_q{}^* = K_{pq}(i_q{}^* - i_q) + K_{iq}\int(i_q{}^* - i_q)dt + \omega(L_d \cdot i_d + \varphi) \qquad ...(1)$$

In the context, Kpd and Kpq in Equation (1) mean a d-axis proportional gain and a q-axis proportional gain respectively. Also, Kid and Kiq mean a d-axis integration gain and a q-axis integration gain, respectively. Ld and Lq mean a d-axis inductance and a q-axis inductance, respectively. Furthermore, $\varphi$ indicates a number of interlinkage flux of permanent magnets.

Then, the current controller 202 outputs the calculated dq-axes voltage command value (vd*, vq*) to the two-phase/three-phase converter 203.

The two-phase/three-phase converter 203 converts the input dq-axis voltage command values (vd*, vq*) into three-phase voltage command value (vu*, vv*, vw*) by using the following Equation (2) based on the electric angle $\theta$ of the rotor of the motor 109, which is detected by the motor angle detector 206.
[Equation 2]

$$\begin{bmatrix} v_u{}^* \\ v_v{}^* \\ v_w{}^* \end{bmatrix} = \sqrt{\frac{2}{3}} \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} \cos\theta & -\sin\theta \\ \sin\theta & \cos\theta \end{bmatrix} \begin{bmatrix} v_d{}^* \\ v_q{}^* \end{bmatrix} \qquad ...(2)$$

Then, the two-phase/three-phase converter 203 outputs the calculated three-phase voltage command values (vu*, vv*, vw*) to the switching signal converter 204.

The switching signal converter 204 generates the switching signal (PWM signal) for switching the switching element 107 in the inverter 105 based on a comparison result between the three-phase voltage command values (vu*, vv*, vw*) and a carrier wave (for example, a triangular wave having a frequency of several kHz to 10 or more kHz). Then, the switching signal converter 204 outputs the switching signal to the inverter 105 so as to make the motor 109 to generate a required torque.

Furthermore, when the switching signal converter 204 of the present embodiment receives the start signal for the short-circuit switching from the short-circuit switching controller 208, the switching signal converter 204 stops the normal switching control based on the switching signal. Later, the switching signal converter 204 generates the switching signal of the on signal so as to allow the switching element 107 to be in the on-state (closed state) in order to execute the short-circuit switching control. The switching signal converter 204 outputs the switching signal to the inverter 105. Further, when the switching signal converter 204 of the present embodiment receives the stop signal for the short-circuit switching from the short-circuit switching controller 208, the switching signal converter 204 outputs the switching signal of the stop signal to the inverter 105 so as to stop the short-circuit switching control.

Thus, the inverter 105 appropriately executes the normal switching control and the short-circuit switching control (non-normal switching control) based on the switching signal.

The three-phase/two-phase converter 205 converts the actual current values (iu, iv, iw) in three-phase detected by the current sensor 111 into a motor current value (id, iq), based on the electric angle θ from the motor angle detector 206 by using the following Equation (3).

[Equation 3]

$$\begin{bmatrix} i_d \\ i_q \end{bmatrix} = \begin{bmatrix} \cos\theta & \sin\theta \\ -\sin\theta & \cos\theta \end{bmatrix} \sqrt{\frac{2}{3}} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} i_u \\ i_v \\ i_w \end{bmatrix} \qquad ...(3)$$

The three-phase/two-phase converter 205 outputs the obtained motor current value (id, iq) to the current controller 202 and the short-circuit switching controller 208.

The motor angle detector 206 obtains the electric angle θ and the motor electrical angular velocity ω based on the detected value by a rotational position detector 110, such as a resolver, provided in the motor 109. A motor angle detector 206 outputs the detected electric angle θ to the three-phase/two-phase converter 205. A motor angle detector 206 simultaneously outputs the detected motor electrical angular velocity ω to the current command value calculator 201 and the short-circuit switching controller 208.

The DC current detector 207 detects the inverter voltage HV. More specifically, the DC current detector 207 detect the voltage of the smoothing capacitor 108 in the inverter 105 as the inverter voltage HV. The DC current detector 207 outputs the detected inverter voltage HV to the current command value calculator 201.

The short-circuit switching controller 208 determines whether to execute the short-circuit switching control based on a relay-on/off signal input from the vehicle controller 102. Further, the short-circuit switching controller 208 determines whether or not to stop the short-circuit switching control according to the state of the motor 109 while executing the short-circuit switching control. When the short-circuit switching controller 208 determines to execute the short-circuit switching control, the short-circuit switching controller 208 outputs the start signal for the short-circuit switching to the switching signal converter 204 for executing the short-circuit switching control and stopping the normal switching control at the same time. Further, when the short-circuit switching controller 208 determines to stop the short-circuit switching control, the short-circuit switching controller 208 outputs the stop signal for the short-circuit switching to the switching signal converter 204. Hereinafter, the processes by the short-circuit switching controller 208 will be described in detail.

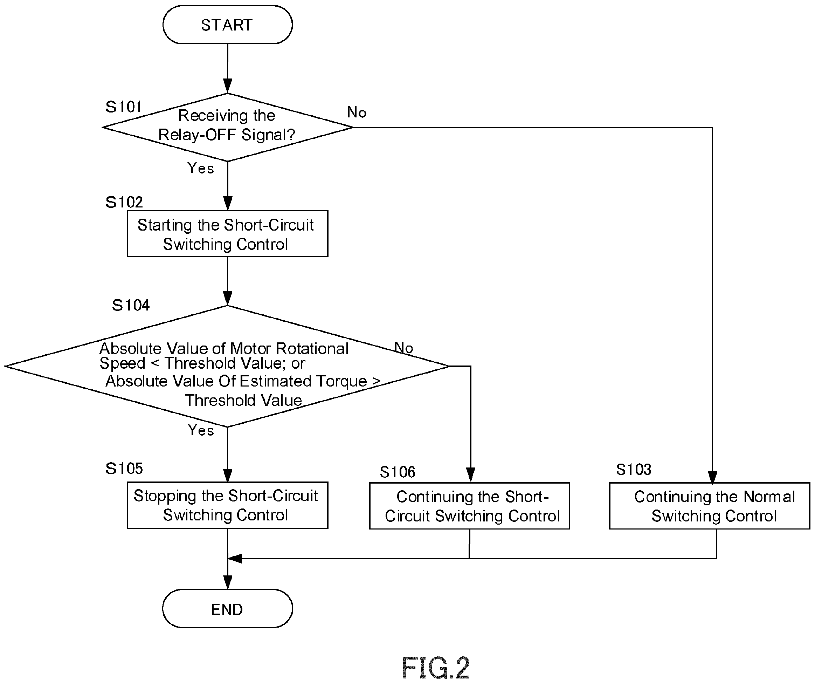

FIG. 2 is a flowchart for explaining a flow of a determination for the start/stop of the short-circuit switching control executed by the short-circuit switching controller 208. It should be noted that the following control routine is programmed into the controller to be repeatedly executed at a predetermined cycle during a startup of the inverter control system.

In step S101, the short-circuit switching controller 208 determines whether to receive a relay-off signal from the vehicle controller 102. For example, the relay-off signal is output when the vehicle controller 102 determines that the battery 103 is not in a normal state. That is, the short-circuit switching controller 208 determines whether the power supply from the battery 103 to the inverter 105 is stopped or not. When the short-circuit switching controller 208 determines to receive the relay-off signal, the short-circuit switching controller 208 decides that the power supply from the battery 103 to the inverter 105 is stopped, and proceeds to a process of step S102. On the other hand, when the short-circuit switching controller 208 determines not to receive the relay-off signal, the short-circuit switching controller 208 decides that the power is being supplied from the battery 103 to the inverter 105, and proceeds to a process of step S103 so as to continue the normal switching control.

In step S102, the short-circuit switching controller 208 outputs a start signal for switching to the switching signal converter 204 so as to start the short-circuit switching control. Thus, the short-circuit switching control is started such that the switching devices Supu, Supv, Supw, Sdwu, Sdwv and Sdww provided in the inverter 105 are all in on-states. When the short-circuit switching control is started, the inverter 105 is in the three-phase short-circuited state. Later, a following process of step S104 is executed.

In step S104, the short-circuit switching controller 208 determines whether to stop the short-circuit switching control or not based on a motor state parameter as a determination standard for determining whether an oscillation occurs in the vehicle or not. The motor state parameter of the present embodiment is a rotational speed of the motor 109 (hereinafter, referred as a motor rotational speed), or an estimated value for a braking torque by the motor 109 (hereinafter, referred as an estimated torque). That is, the short-circuit switching controller 208 of the present embodiment determines whether to stop the short-circuit switching control based on the motor rotational speed or the estimated torque.

First, a detailed description will be given for the process of the step S104, which is executed based on the motor rotational speed.

In step S104 in this case, the short-circuit switching controller 208 determines whether or not an absolute value of the motor rotational speed (a rotational number) is less than a predetermined rotational speed threshold. The motor rotational speed (rpm) as the motor status parameter is obtained by multiplying $60/(2\pi)$ and the motor electrical angular velocity $\omega$ (rad/s), which is output from the motor angle detector 206.

If the absolute value of the motor rotational speed is less than a predetermined rotational speed threshold, the short-circuit switching controller 208 proceeds to step S105 so as to stop the short-circuit switching control.

Here, the motor 109, which is a permanent magnet synchronous motor, generates the braking torque in accordance with the motor rotational speed, when the relay 104 is opened (a relay cutting) such that the voltage supplied to the inverter 105 (inverter voltage HV) becomes 0V, while the short-circuit switching control is being continued. This change of the braking torque causes a torsional oscillation in the drive shaft 114. Then, a changing rate of the braking torque tends to be larger as the motor rotational speed becomes lower, as the feature thereof. Therefore, if the braking torque greatly changes in a low rotational range at the time of the relay cutting, the torsional oscillation in the drive shaft 114 is induced.

Therefore, in step S104, when the absolute value of the motor rotational speed is lower than the predetermined rotational speed threshold, the short-circuit switching control is decided to be stopped. Thus, it is possible to suppress the generation of the above described torsional oscillation in the drive shaft 114, which is caused by the change of the braking torque in the low rotational range.

On the other hand, if the absolute value of the motor rotational speed is equal to or larger than the predetermined rotational speed threshold, the short-circuit switching controller 208 proceeds to a process of step S106, and continues the short-circuit switching control. Thus, there may exists a risk caused by an induced voltage, which is generated by the stop of the short-circuit switching control, and it is possible to avoid a risk that the inverter voltage HV increases and becomes high. A specific setting method for the predetermined rotational speed threshold will be described later.

Next, a detailed description will be given when the process of step S104 is executed based on the estimated torque.

In step S104 in this case, the short-circuit switching controller 208 determines whether the absolute value of the estimated torque exceeds a predetermined torque threshold. The braking torque by the motor 109 may be estimated (acquired) by a known method, and the estimating (acquiring) method is not particularly limited.

If the absolute value of the estimated torque exceeds the predetermined torque threshold, the change of the torque induces the torsional oscillation in the drive shaft 114, in the same manner when the absolute value of the above-described motor rotational speed is less than the predetermined rotational speed threshold. Therefore, if the absolute value of the estimated torque exceeds the predetermined torque threshold, the short-circuit switching controller 208 proceeds to step S105 so as to stop the short-circuit switching control. That is, in the process of step S104, instead of the motor rotational speed described above, the braking torque (the estimated torque), which directly causes the torsional oscillation in the drive shaft 114, may be used as a determination standard. A specific setting method for the predetermined torque threshold will be described later.

On the other hand, if the absolute value of the estimated torque is equal to or less than the predetermined torque threshold, the short-circuit switching controller 208 proceeds to execute the process of step S106, and continues the short-circuit switching control.

Next, a method for setting "the predetermined rotational speed threshold" and "the predetermined torque threshold" will be explained.

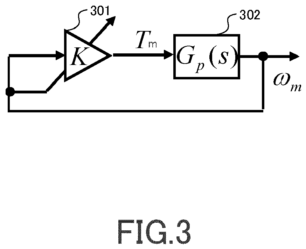

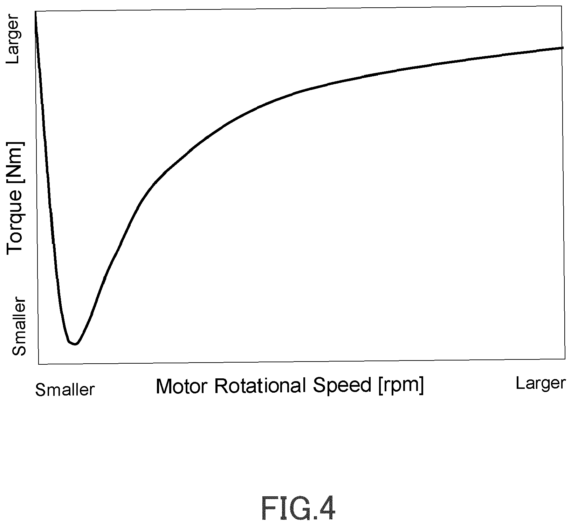

FIG. 3 shows a block configuration consisting of a vehicle model that represents a transfer characteristic for the motor 109 and the vehicle, while the motor 109 is under the process of the short-circuit switching control, i.e. in the three-phase short-circuited state, and the motor 109 is mounted in the vehicle. A variable gain 301 (a gain K) is a gain showing a characteristic of the motor 109 in the three-phase short-circuited state. The variable gain 301 has a characteristic as shown in FIG. 4.

FIG. 4 is a diagram showing the characteristic of the variable gain 301, i.e. the characteristic of the motor 109 in the three-phase short-circuited state. As shown in the figure, in the three-phase short-circuited state, the motor 109 has a characteristic that the torque varies nonlinearly according to the rotational speed. When the inverter voltage HV of the inverter 105 is 0V, the motor 109 becomes in the same condition as the three-phase short-circuited state, because the voltages between the three-phase is 0v. Therefore, in other words, the characteristic for the motor 109 in the three-phase short-circuited state can be described as a characteristic for the motor 109 when the relay 104 is opened (the relay cutting), namely, when the power supply from the battery 103 to the inverter 105 is stopped.

A vehicle model 302 (Gp (s)) shown in FIG. 3 is a vehicle model for modeling a transmission system of the driving force in the vehicle, and the vehicle model shows the transfer characteristic from the output torque by the vehicle (motor torque Tm) to the motor rotational speed. Later, details of the model Gp(s) will be described.

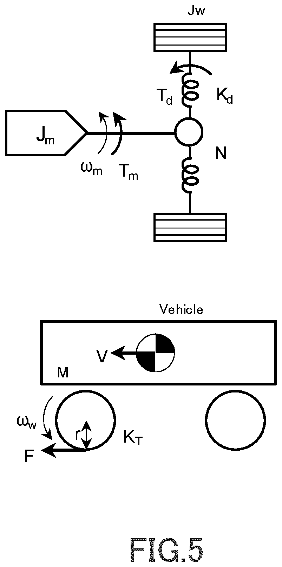

FIG. 5 is a diagram modeling the transmission system of the driving force in the vehicle, and each parameter in the figure is as shown below.

$J_m$: an inertia of the motor
$J_w$: an inertia of drive wheels
M: a weight of the vehicle
$K_D$: a torsional rigidity of the driving system
$K_T$: a coefficient related to a friction between tires and a road surface
N: an over-gear ratio
r: a load radius of tires
$\omega_m$: an angular velocity of the motor (motor rotational speed)
$T_m$: a torque by the motor
$T_D$: a torque in the drive wheels
F: a force applied to the vehicle
v: a speed of the vehicle
$\omega_w$: an angular velocity of the drive wheels

Then, from FIG. 11, it is possible to derive the motion equations as follows.
[Equation 4]

$$J_m \cdot \frac{d}{dt}\omega_m = T_m - \frac{T_D}{N} \quad ...(4)$$

[Equation 5]

$$2J_w \cdot \frac{d}{dt}\omega_w = T_D - rF \quad ...(5)$$

[Equation 6]

$$M \cdot \frac{d}{dt}v = F \quad ...(6)$$

[Equation 7]

$$T_D = K_D \cdot \int \left( \frac{\omega_m}{N} - \omega_w \right) dt \ ...(7)$$

[Equation 8]

$$F = K_T \cdot \left( r \cdot \omega_w - v \right) \quad ...(8)$$

The transfer characteristic Gp(s) from the motor torque Tm to the motor rotational speed is obtained based on the motion equations shown as Equations (4) to (8), and is expressed by the following equation (9).
[Equation 9]

$$G_p(s) = \frac{b_3 s^3 + b_2 s^2 + b_1 s + b_0}{s\left(a_4 s^3 + a_3 s^2 + a_2 s + a_1\right)} \quad ...(9)$$

In the context, the parameters of $a_4$, $a_3$, $a_2$, $a_1$, $b_3$, $b_2$, $b_1$ and $b_0$ in Equation (9) are expressed by the following equations (10) to (17).
[Equation 10]

$$a_4 = 2J_m J_w M \qquad ...(10)$$

[Equation 11]

$$a_3 = J_m (2J_w + Mr^2)K_T \quad ...(11)$$

[Equation 12]

$$a_2 = (J_m + 2J_w / N^2)MK_D \qquad ...(12)$$

[Equation 13]

$$a_1 = (J_m + 2J_w / N^2 + Mr^2 / N^2)K_D K_T \qquad ...(13)$$

[Equation 14]

$$b_3 = 2J_w M \qquad ...(14)$$

[Equation 15]

$$b_2 = (2J_w + Mr^2)K_T \qquad ...(15)$$

[Equation 16]

$$b_1 = MK_D \quad ...(16)$$

[Equation 17]

$$b_0 = K_D K_T \quad ...(17)$$

By examining the poles and zero points of the transfer function shown in Equation (9), it is possible to obtain the transfer function shown in Equation (18) below by an approximation. In the approximated transfer function, one pole and one zero point have very close values. That feature corresponds to the fact that $\alpha$ and $\beta$ in the following Equation (18) have very close values.
[Equation 18]

$$G_p(s) = \frac{(s + \beta)(b_2' s^2 + b_1' s + b_0')}{s(s + \alpha)(a_3' s^2 + a_2' s + a_1')} \qquad ...(18)$$

Therefore, by the pole-zero cancellation (approximating by $\alpha=\beta$) in equation (18), Gp(s) constitutes a transfer characteristic of "(secondary) / (tertiary)" as shown in the following Equation (19),
[Equation 19]

$$G_p(s) = \frac{b_2' s^2 + b_1' s + b_0'}{s(a_3' s^2 + a_2' s + a_1')} \qquad ...(19)$$

As described above, the details for the variable gain 301 (the variable gain K) and the vehicle model 302 of (Gp(s)) shown in FIG. 3 are explained. Next, a description will be given for a simulation result (a time response) using the block configuration shown in FIG 3.

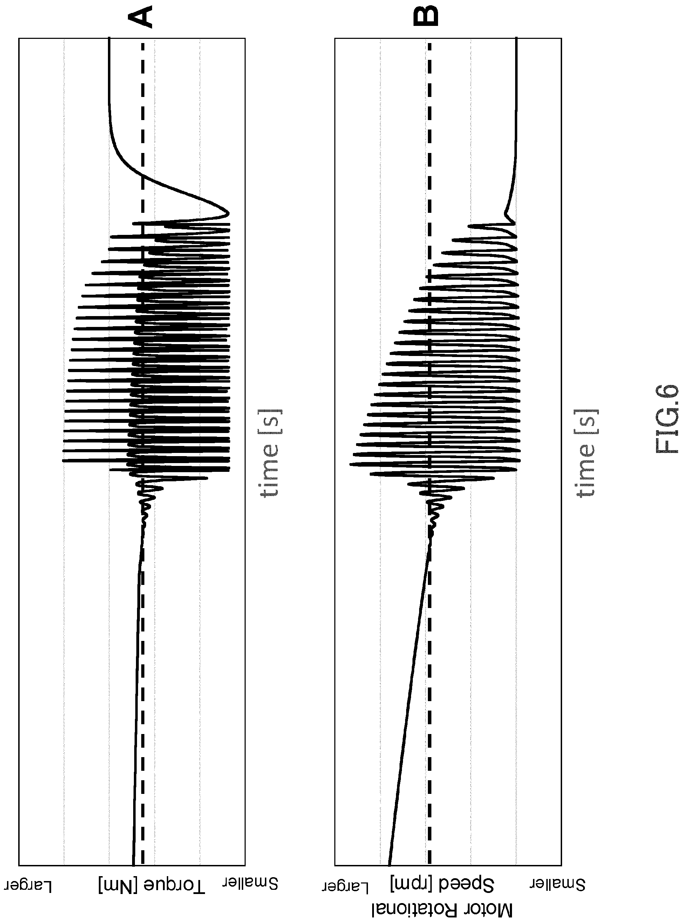

FIG. 6 is a diagram showing a simulation result (time response) using the block configuration shown in FIG. 3. The upper part shows the time response of the braking torque (estimated torque), and the lower part shows the time response of the motor rotational speed. The dotted lines indicated by A and B in the figure show the points at which the motor rotational speed and the estimated torque start to oscillate respectively, while the motor rotational speed gradually decreases after entering the three-phase short-circuited state.

Therefore, the "predetermined torque threshold" of the present embodiment is set based on A, which shows the estimated torque at which the estimated torque starts to oscillate. The "predetermined rotational speed threshold" is set based on B, which shows the motor rotational speed at which the motor rotational speed starts to oscillate. However, since the torque shown in the upper part of the figure is the braking torque, the torque at least around the point indicated by A is a negative value in principle. Therefore, the "predetermined torque threshold" is set based on the absolute value of the torque indicated by A.

Here, as described above, the motor 109, which is the permanent magnet synchronous motor, generates the braking torque in accordance with the rotational speed of the motor, when the short-circuit switching control is continued while the relay 104 is opened such that the inverter voltage HV becomes 0V. The changing rate of the braking torque tends to become larger as the motor rotational speed is lower, as the feature thereof. Therefore, the torsional oscillation of the drive shaft 114 is initiated by a large change of the braking torque while the motor rotational speed is low at the time of the relay cutting.

In the present embodiment, the "predetermined rotational speed threshold" is set to a value equals to or higher than the absolute value of the rotational speed at which the motor rotational speed starts to oscillate (refer to B). Thus, when the absolute value of the motor rotational speed is determined to be smaller than the predetermined rotational speed threshold in step S102 in FIG. 2, the short-circuit switching control is stopped before the motor rotational speed starts to oscillate. Therefore, it is possible to avoid the initiation of the torsional oscillation of the drive shaft 114.

Further, in the present embodiment, the predetermined torque threshold value is set to a value equal to or less than the absolute value of the torque at which the torque of the motor 109 starts to oscillate. Therefore, when the absolute value of the estimated torque is determined to exceed the predetermined torque threshold in step S102 in FIG. 2, the short-circuit switching control is stopped before the torque of the motor 109 starts to oscillate. Therefore, it is possible to avoid the initiation of the torsional oscillation of the drive shaft 114.

The above is the detail of the setting methods for the "predetermined rotational speed threshold" and the "predetermined torque threshold" of the present embodiment. The description will be continued by returning to the flowchart in FIG. 2.

As described above, if the motor speed is determined to be less than the predetermined rotational speed threshold, or, if the estimated torque is determined to exceed the predetermined torque threshold, the short-circuit switching controller 208 proceeds to the process of step S105 in order to stop the short-circuit switching control in the inverter 105.

In step S105, the short-circuit switching controller 208 outputs the stop signal for the short-circuit switching to the switching signal converter 204 in order to release the three-phase short-circuited state of the inverter 105. Thus, the short-circuit switching control for the inverter 105 is stopped. When the short-circuit switching control is stopped, for example, the switching devices Supu, Supv, Supw, Sdwu, Sdwv and Sdww included in the inverter 105 are all in the off-state (open state).

On the other hand, when determining NO in the step S104, the process of step S106 will be executed.

In step S106, the short-circuit switching controller 208 determines that there is no possibility that the oscillation of the drive shaft 114 described above occurs. The short-circuit switching controller 208 does not output the stop signal for the switching, and terminates the start/stop determination process for the short-circuit switching control. Thus, the short-circuit switching control of the inverter 105, which is based on the torque command value T* from the vehicle controller 102 is continued.

The inverter control method according to the embodiment described above leads to the following effects.

The control method for the inverter of one of the embodiments is provided in the vehicle, which includes the motor 109 that transmits torque to the drive wheels 115, the inverter 105 which converts the DC power into the AC power and supplies the AC power to the motor 109, and the DC power source (the battery 103) for supplying the DC power to the inverter 105. The control method is provided for controlling the switching of the inverter 105 in the vehicle. The control method for the inverter consists of determining whether or not the power supply to the inverter 105 is stopped, and acquiring the motor state parameter as the variable which represents the state of the motor 109 and as the determination standard for determining whether the oscillation occurs in the vehicle. Then, when the power supply to the inverter 105 is stopped, the short-circuit switching control of the inverter 105 is stopped before the oscillation occurs in the vehicle based on the acquired motor state parameter. As a result, the short-circuit switching control of the inverter 105 can be stopped before the occurrence of the oscillation in the vehicle caused by the torsional oscillation of the drive shaft 114. Therefore, it is possible to avoid oscillation occurring in the vehicle when the power supply from the battery 103 to the inverter 105 is stopped.

Further, according to the control method for the inverter of one of the embodiments, when the absolute value of the motor rotational speed as the motor state parameter is less than the predetermined rotational speed threshold, the short-circuit switching control is stopped. Also, when the absolute value of the motor rotational speed is equal to or larger than the predetermined rotational speed threshold, the short-circuit switching control is continued. As a result, by using the motor rotational speed as the determination standard, it is possible to stop the short-circuit switching control before the oscillation occurrence in the vehicle. Further, when the absolute value of the motor speed is equal to or larger than the predetermined rotational speed threshold, the short-circuit switching control is continued. Therefore, it is possible to avoid the inverter voltage HV becomes high by the induced voltage.

Further, according to the control method for the inverter of one of the embodiments, the predetermined rotational speed threshold is set to be larger than the absolute value of the motor rotational speed at the time when the oscillation of the motor rotational speed starts after the power supply to the inverter 105 is stopped. By such setting, the predetermined rotational speed threshold, which is to be compared with the motor rotational speed, is set to be larger than the absolute value of the rotational speed at which the oscillation starts in the vehicle. Therefore, it is possible to reliably avoid generating the oscillation in the vehicle.

Further, according to the control method for the inverter of one of the embodiments, when the absolute value of the torque as the motor state parameter exceeds the predetermined torque threshold, the short-circuit switching control stops. When the absolute value of the torque is less than or equal to the predetermined torque threshold, the short-circuit switching control continues. As a result, by using the estimated torque as the determination standard, it is possible to stop the short-circuit switching control of the inverter 105 before the oscillation occurs in the vehicle.

Further, according to the control method for the inverter of one of the embodiments, the predetermined torque threshold is set to a value equal to or less than the absolute value of the torque at the time when the oscillation of the torque starts after the power supply to the inverter 105 is stopped. Thus, since the predetermined torque threshold, which is to be compared with the estimated torque, is set to be equal to or larger than the absolute value of the torque at which the oscillation of the vehicle starts. As a result, it is possible to reliably avoid the occurrence of oscillation in the vehicle.

While embodiments of the present invention have been described above, the above embodiment is only a part of the application example of the present invention, and the technical scope of the present invention is not intended to limit the technical scope of the present invention to the specific configuration of the above embodiment.

For example, in the above embodiment, the short-circuit switching controller 208 executes the short-circuit switching control in response to a trigger, the trigger being receiving of the relay-off signal indicating that the relay 104 is turned off (opened). However, instead of receiving the relay-off signal, the short-circuit switching control may be performed in response to a trigger the trigger being detecting that the inverter voltage HV exceeds the specified voltage range of the battery 103. That is, as the trigger for performing the short-circuit switching control, it is possible to employ a detection of any events indicating that a request for executing the short-circuit switching control has occurred in accordance with the state of the battery 103.

Further, in each of the above embodiments, the example of executing the determination for stopping the short-circuit switching control based on the motor speed or the estimated torque, as the motor state parameter representing the state of the motor 109, has been described.

However, other parameters representing the state of the motor 109 (e.g. the motor electrical angular velocity ω) may be used to perform the determination for stopping the short-circuit switching control, as long as the other parameters could shows the occurrence of the oscillation in the vehicle after the stop of the power supply from the battery 103 to the inverter 105.

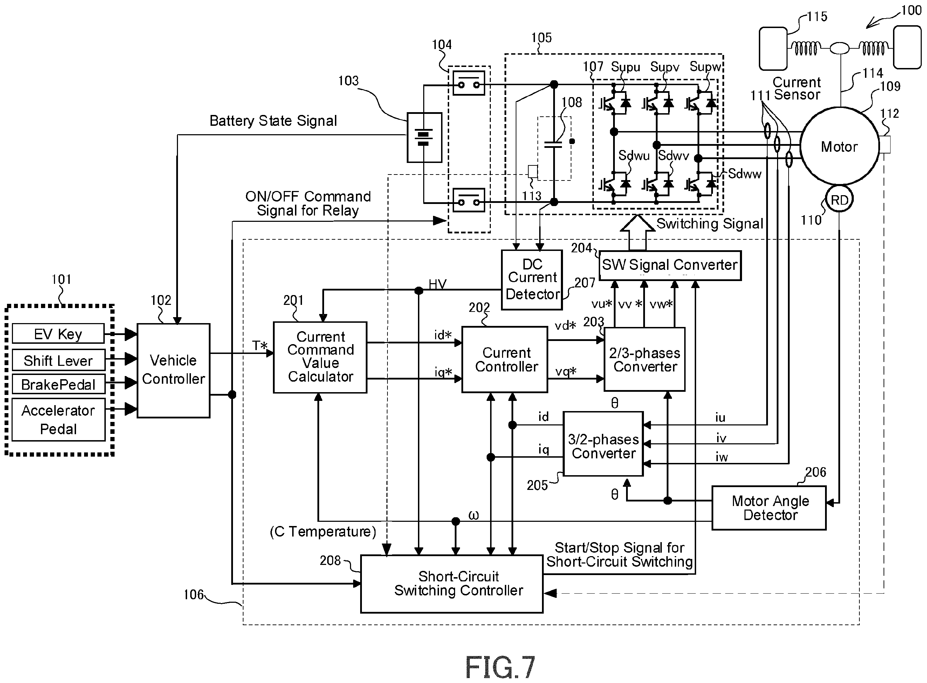

Further, the control method for the inverter according to the present invention does not necessarily need to be executed on the assumption of the motor control device 100 shown in FIG. 1, it may be executed on the assumption of the motor control device 200 shown in FIG 7.

As shown in FIG. 7, the motor control device 200 includes, in addition to the configuration of the motor control device 100, a thermistor 112 provided in the motor 109 to detect the motor temperature, and a thermistor 113 provided in the smoothing capacitor 108 to detect the capacitor temperature. Then, the detected temperatures of the motor and the capacitor are output to the short-circuit switching controller 208. That is, according to the motor control device 200, the short-circuit switching controller 208 can execute the determination for the stop of the short-circuit switching control in consideration of the detected temperatures of the motor and the capacitor. Thus, by consideration of the temperature characteristics of at least one of the motor 109 and the inverter 105, it is possible to execute the determination for the stop more accurately.

**Claims**

1. An inverter control method for controlling a switching of an inverter in a vehicle, the vehicle having: a motor for transmitting torque to drive wheels; the inverter for converting DC power into AC power mutually and supplying the AC power to the motor; and a DC power source for supplying the DC power to the inverter, the control method comprising:

   determining whether or not a power supply to the inverter is stopped;
   executing a short-circuit switching control to turn on switching elements provided in the inverter when the power supply to the inverter is stopped;
   obtaining a motor state parameter as a variable representing a state of the motor, the motor state parameter being used as a determination standard for determining whether or not an oscillation occurs in the vehicle; and
   stopping the short-circuit switching control before the oscillation occurs in the vehicle based on the motor state parameter obtained, when the power supply to the inverter is stopped.

2. The inverter control method according to claim 1, wherein
   the short-circuit switching control is stopped when an absolute value of a motor rotational speed as the motor state parameter is smaller than a predetermined rotational speed threshold, and the short-circuit switching control continues when the absolute value of the motor rotational speed is equal to or larger than the predetermined rotational speed threshold.

3. The inverter control method according to claim 2, wherein
   the predetermined rotational speed threshold is set to a value equal to or larger than the absolute value of the motor rotational speed, the motor rotational speed being a speed at a timing of starting the oscillation in the motor rotational speed after stopping the power supply to the inverter.

4. The inverter control method according to claim 1, wherein
   the short-circuit switching control is stopped when an absolute value of a torque as the motor state parameter is larger than a predetermined torque threshold, and the short-circuit switching control continues when the absolute value of the torque is equals to or smaller than the predetermined torque threshold.

5. The inverter control method according to claim 4, wherein
   the predetermined torque threshold is set to a value equal to or smaller than the absolute value of the torque, the absolute value of the torque being at a timing of starting the oscillation in the torque after stopping the power supply to the inverter.

6. An inverter control system in a vehicle, the vehicle having: a motor for transmitting torque to drive wheels; an inverter for converting DC power into AC power and supplying the AC power to the inverter; a DC power source for supplying the DC power to the inverter; and a controller for controlling a switching of the inverter, wherein
   the controller is configured to
   determine whether or not a power supply to the inverter is stopped;
   execute a short-circuit switching control to turn on switching elements provided in the inverter when the power supply to the inverter is stopped;
   obtain a motor state parameter as a variable representing a state of the motor, the motor state parameter being used as a determination standard for determining whether or not an oscillation occurs in the vehicle; and
   stop the short-circuit switching control before the oscillation occurs in the vehicle based on the motor state parameter obtained, when the power supply to the inverter is stopped.

FIG.1

START

S101 Receiving the Relay-OFF Signal? — No

Yes

S102 Starting the Short-Circuit Switching Control

S104 Absolute Value of Motor Rotational Speed < Threshold Value; or Absolute Value Of Estimated Torque > Threshold Value — No

Yes

S105 Stopping the Short-Circuit Switching Control

S106 Continuing the Short-Circuit Switching Control

S103 Continuing the Normal Switching Control

END

FIG.2

FIG.3

FIG.4

FIG.5

FIG.6

FIG.7

EP 3 805 038 A1

## INTERNATIONAL SEARCH REPORT

| International application No. |
| --- |
| PCT/JP2018/021283 |

| A. CLASSIFICATION OF SUBJECT MATTER |
| --- |
| Int. Cl. B60L7/18(2006.01)i |

According to International Patent Classification (IPC) or to both national classification and IPC

| B. FIELDS SEARCHED |
| --- |
| Minimum documentation searched (classification system followed by classification symbols) |
| Int. Cl. B60L7/18 |

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 2018-85844 A (MITSUBISHI MOTORS CORP.) 31 May | 1-2, 4, 6 |
| A | 2018, paragraphs [0009], [0024]-[0030], fig. 1-7 (Family: none) | 3, 5 |
| A | JP 2016-63597 A (DAIMLER AG.) 25 April 2016, entire text, all drawings (Family: none) | 1-6 |
| A | JP 2009-220791 A (TOYOTA MOTOR CORP.) 01 October 2009, entire text, all drawings (Family: none) | 1-6 |

☐ Further documents are listed in the continuation of Box C.    ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 15.08.2018 | 28.08.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 805 038 A1**

**REFERENCES CITED IN THE DESCRIPTION**

**Patent documents cited in the description**

- JP 2006074841 A